# EUROPEAN PATENT SPECIFICATION

(11) **EP 3 637 156 B1**
(45) Date of publication and mention of the grant of the patent: **07.05.2025**
(21) Application number: 18806830.8
(22) Date of filing: 07.03.2018
(51) Int. Cl.: G03B 11/04, G03B 30/00, G02B 5/00, G02B 27/00, G02B 13/00, G02B 7/02, G03B 17/02

(54) **MULTILAYER LIGHT-BLOCKING FILM, AND LIGHT BLOCKING RING FOR OPTICAL EQUIPMENT, LENS UNIT, AND CAMERA MODULE USING SAME**
MEHRFACHSCHICHT LICHTABSCHIRMFOLIE UND LICHTABSCHIRMRING FÜR OPTISCHE AUSRÜSTUNG, LINSENEINHEIT UND KAMERAMODUL MIT VERWENDUNG DAVON
MULTI-COUCHES FILM DE BLOCKAGE CONTRE LA LUMIÈRE, ET BAGUE DE BLOCKAGE CONTRE LA LUMIÈRE POUR ÉQUIPEMENT OPTIQUE, UNITÉ LENTILLE ET MODULE DE CAMÉRA LES UTILISANT

(30) Priority: 23.05.2017 JP 2017101670
(43) Date of publication of application: 15.04.2020
(73) Proprietor: Kimoto Co., Ltd., Saitama 338-0013 (JP)
(72) Inventor: NAGAHAMA, Tsuyoshi, Saitama-shi Saitama 338-0013 (JP); AIHARA, Kyoko, Saitama-shi Saitama 338-0013 (JP)
(74) Representative: Strehl & Partner mbB
(86) International application number: PCT/JP2018/008741
(87) International publication number: WO 2018/216307

(56) References cited:
- WO-A1-2010/026853
- JP-A- 2008 225 099
- JP-A- 2014 005 372
- JP-A- 2017 015 815
- US-A1- 2015 166 832
- US-A1- 2016 011 415

## Description

### Technical Field

The present invention relates to a multilayer light-blocking film, and a light-blocking ring for optical equipment, a lens unit, and a camera module using the same.

### Background Art

A camera module for taking an image of an object and converting it into an image signal is built into electronic equipment, for example, an information communication terminal such as a cellular phone or a smartphone, or a digital camera. This camera module comprises an image pickup device for picking up an image of an object, and a lens unit for forming the image of the object on this image pickup device. The lens unit is usually composed of a combination of a plurality of lenses.

In this type of camera module, it is required to remove unnecessary incident light and reflected light, prevent the occurrence of halation, lens flare, a ghost, and the like, and improve the image quality of a picked-up image. Therefore, lens units, camera modules, and the like having light-blocking members for cutting unnecessary light are proposed.

As such light-blocking members, light-blocking films in which light-blocking layers containing carbon black, a lubricant, fine particles, and a binder resin are formed on both surfaces of a substrate film are proposed (see Patent Literatures 1 and 2).

### Citation List

### Patent Literature

Patent Literature 1: Japanese Patent Laid-Open No. 9-274218
Patent Literature 2: WO2006/016555

US 2016/0114415 A1 discloses an optical lens with the features in the preamble of present claim 1. Another conventional multilayer film is described in US 2015/0166832 A1.

### Summary of Invention

### Technical Problem

In recent years, modularization has advanced worldwide, and modules have been manufactured and controlled in manufacturing plants in the countries of the world in the form of a lens unit including a plurality of lenses and light-blocking plates stacked in the optical axis direction, a camera module in which an image pickup device is further incorporated into this lens unit, or the like. With this, a light-blocking film or a light-blocking member that is one part of each module is also conveyed, and manufactured and controlled, in each place.

Here, when a light-blocking member having a desired shape is made from a light-blocking film, or when a light-blocking member is incorporated into a module, manufacturing failure such as poor incorporation can be caused unless the front and back surfaces of the light-blocking film or the light-blocking member are discriminated. In these days when transworld modularization advances, it is not easy to promote the thoroughness of the control (the confirmation of the front and back surfaces) of a light-blocking film or a light-blocking member worldwide.

In addition, due to the advancement of the miniaturization and film thinning of camera modules, light-blocking members of extremely small size have been mounted. For example, for a light-blocking film in which black light-blocking layers are provided, when the size is several centimeters square or less, it is extremely difficult to discriminate the front and back of the light-blocking film. Especially, for a light-blocking film having high optical density, this tendency is significant.

The present invention has been made in view of the above problems. Specifically, it is an object of the present invention to provide a multilayer light-blocking film whose front and back surfaces are easy to discriminate while it has light-blocking layers having high optical density whose front and back are usually difficult to discriminate, and a light-blocking ring for optical equipment, a lens unit, a camera module, and the like using the same.

### Solution to Problem

The present inventors have studied diligently from a human engineering approach in order to solve the above problems. As a result, the present inventors have found that the above problems can be solved by setting a predetermined color difference ΔE*ab between a first light-blocking layer and a second light-blocking layer, and by further allowing the end surfaces to function as marks as needed, and completed the present invention.

The solution provided by the present invention is defined in appended claim 1. The dependent claims relate to preferred embodiments.

### Advantageous Effects of Invention

According to the present invention, it is possible to provide a multilayer light-blocking film and a light-blocking ring for optical equipment whose front and back are easy to discriminate while they have light-blocking layers having high optical density. By using these multilayer light-blocking film and light-blocking ring for optical equipment, handling properties at a module manufacturing site are improved, and the burden of parts control can be reduced. Therefore, the occurrence of manufacturing failure such as poor incorporation can be suppressed, and the yield can be improved. Therefore, a lens unit, a camera module, and the like using these have excellent productivity and economy.

### Brief Description of Drawings

[Figure 1] Figure 1 is a perspective view schematically showing a multilayer light-blocking film and its rolled web in one embodiment.
[Figure 2] Figure 2 is a view of the II-II cross section in Figure 1.
[Figure 3] Figure 3 is a plan view of the multilayer light-blocking film in one embodiment.
[Figure 4] Figure 4 is an exploded perspective view schematically showing light-blocking rings for optical equipment (multilayer light-blocking films), and a lens unit and a camera module using the same, in one embodiment.
[Figure 5] Figure 5 is a cross-sectional view schematically showing the light-blocking ring for optical equipment (multilayer light-blocking film) in one embodiment.

### Description of Embodiments

Embodiments of the present invention will be described in detail below with reference to the drawings. Positional relationships such as top, bottom, left, and right are based on the positional relationships shown in the drawings unless otherwise noted. The dimensional ratios in the drawings are not limited to the ratios shown. However, the following embodiments are illustrations for explaining the present invention, and the present invention is not limited to these. As used herein, for example, the description of the numerical value range "1 to 100" includes both the upper limit value "100" and the lower limit value "1". The same applies to the description of other numerical value ranges.

### (First Embodiment)

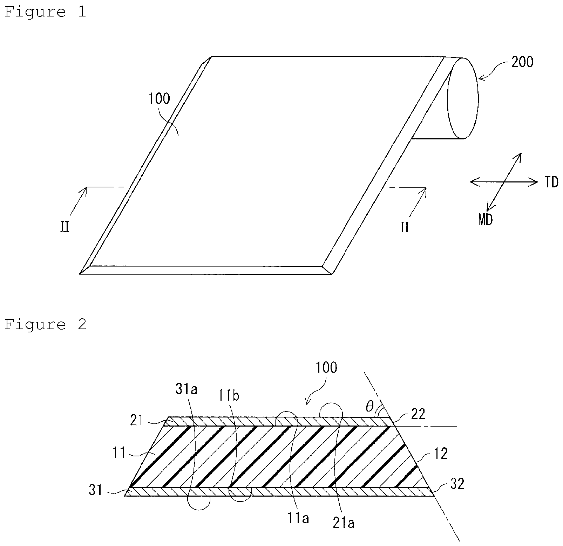

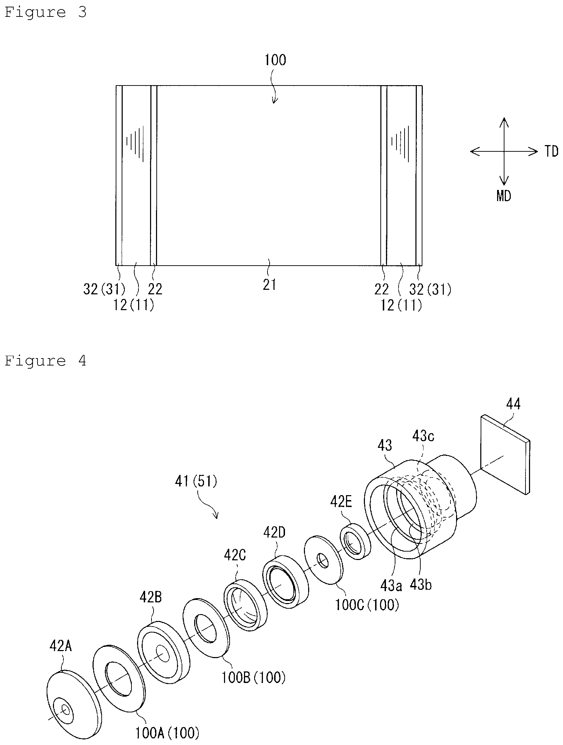

Figure 1 is a perspective view schematically showing a multilayer light-blocking film 100 and its web roll 200 in a first embodiment of the present invention, and Figure 2 is a cross-sectional view showing the main part of the multilayer light-blocking film 100 (the II-II cross section in Figure 1). Figure 3 is a plan view of the multilayer light-blocking film 100. This multilayer light-blocking film 100 comprises at least a substrate film 11, a first light-blocking layer 21 provided on one major surface 11a side of this substrate film 11, and a second light-blocking layer 31 provided on the other major surface 11b side. The multilayer light-blocking film 100 has a multilayer structure (three-layer structure) in which the light-blocking layer 21, the substrate film 11, and the light-blocking layer 31 are at least arranged in this order. In this multilayer structure, the first light-blocking layer 21 is disposed on the outermost surface on the front side, and the second light-blocking layer 31 is disposed on the outermost surface on the back side, and as shown in Figure 2, the first and second light-blocking layers 21 and 31 are disposed on the outermost surfaces on the front side and the back side respectively in an exposed state. By winding this multilayer light-blocking film 100 in the form of a cored or coreless roll, the rolled web 200 that is a wound body is formed.

As used herein, "provided on one (the other) major surface side of the substrate film " means including not only a mode in which the light-blocking layer 21 or 31 is directly placed on a surface (for example, the major surface 11a or the major surface 11b) of the substrate film 11 as in this embodiment, but a mode in which an optional layer (for example, a primer layer or an adhesive layer) is interposed between a surface of the substrate film 11 and the light-blocking layer 21 or 31. A multilayer structure comprising at least the first light-blocking layer 21 and the second light-blocking layer 31 means including not only a structure in which only the first light-blocking layer 21 and the second light-blocking layer 31 are directly layered, but the above-described three-layer structure and a multilayer structure of four or more layers in which an optional layer or optional layers are further provided in a three-layer structure.

The type of the substrate film 11 is not particularly limited as long as it can support the light-blocking layers 21 and 31. From the viewpoint of dimensional stability, mechanical strength, weight reduction, and the like, synthetic resin films are preferably used. Specific examples of the synthetic resin films include polyester films, ABS (acrylonitrile-butadiene-styrene) films, polyimide films, polystyrene films, and polycarbonate films. Acrylic, polyolefin-based, cellulosic, polysulfone-based, polyphenylene sulfide-based, polyethersulfone-based, and polyetheretherketone-based films can also be used. Among these, as the substrate film 11, polyester films and polyimide films are preferably used. Especially, uniaxially or biaxially stretched films, particularly biaxially stretched polyester films, have excellent mechanical strength and dimensional stability and therefore are particularly preferred. For heat-resistant applications, uniaxially or biaxially stretched polyimide films are particularly preferred. One of these can be used alone, and two or more of these can also be used in combination.

The thickness of the substrate film 11 can be appropriately set according to the required performance and the application and is not particularly limited. From the viewpoint of weight reduction and film thinning, the thickness of the substrate film 11 is preferably 0.5 µm or more and 50 µm or less, more preferably 1 µm or more and 25 µm or less, further preferably 4 µm or more and 10 µm or less, and particularly preferably 5 µm or more and 7 µm or less. From the viewpoint of improving adhesiveness to the light-blocking layers 21 and 31, the surfaces of the substrate film 11 can also be subjected to various known surface treatments such as anchor treatment and corona treatment as needed.

Inclined end surfaces 12 are provided on the outer peripheral side surfaces (outer peripheral end surfaces) of the substrate film 11. Due to these inclined end surfaces 12, the cross-sectional structure of the substrate film 11 has a trapezoidal shape in which the lower base is longer than the upper base, so that the film width of the substrate film 11 increases from the light-blocking layer 21 toward the light-blocking layer 31 (see Figure 2).

These inclined end surfaces 12 are provided so as to be exposed in a planar view from the normal direction of the major surface 11a of the substrate film 11 so as to be visible from the major surface 11a side of the substrate film 11 when the substrate film 11 is brought into a flat state as shown in Figure 2 (see Figure 3). Specifically, the inclination angle θ (depression angle θ) between the major surface 11a and the inclined end surface 12 of the substrate film 11 is set to be 10 to 87°. From the viewpoint of improving the visibility of the inclined end surfaces 12 in a planar view from the major surface 11a side, maintaining the strength of the end surfaces of the substrate film 11, maintaining productivity, and the like, the inclination angle θ is preferably 30 to 85°, more preferably 40 to 83°, and further preferably 45 to 80°. As long as the inclined end surfaces 12 are visible from the major surface 11a side of the substrate film 11, for example, transparent or semitransparent protective layers or the like may be provided on the inclined end surfaces 12 for film end surface strengthening.

The appearance of the substrate film 11 may be any of transparent, semitransparent, and opaque appearance and is not particularly limited. For example, foamed synthetic resin films such as foamed polyester films, and synthetic resin films in which black pigments such as carbon black or other pigments are contained can also be used. From the viewpoint of improving the visibility of the inclined end surfaces 12 in a planar view from the major surface 11a side, the substrate film 11 preferably has a total light transmittance of 80.0 to 99.9%, more preferably 83.0 to 99.0%, and further preferably 85.0 to 99.0%.

The light-blocking layers 21 and 31 are light-blocking films having an optical density (OD) of 2.5 or more in total. As used herein, the optical density (OD) is a value obtained by measuring in accordance with JIS-K7651: 1988 using an optical densitometer (TD-904: GretagMacbeth) and a UV filter. From the viewpoint of having higher light-blocking properties, the light-blocking layers 21 and 31 each preferably have an optical density (OD) of 1.5 or more for a single layer and each more preferably have an optical density (OD) of 1.7 or more for a single layer. When the light-blocking layers 21 and 31 are layered, the optical density (OD) of the layered body is preferably 2.5 to 6.0, more preferably 4.5 to 6.0, further preferably 5.0 to 6.0.

When the difference between the 60-degree glossinesses of the light-blocking layers 21 and 31 is set, it is easier to discriminate the front and back. Here, the 60-degree glossiness is a value obtained by measuring the glossiness (specular glossiness) (%) of the surface of the light-blocking layer 21 or 31 at incidence and acceptance angles of 60° in accordance with JIS-28741: 1997 using a digital variable angle glossmeter (UGV-5K: manufactured by Suga Test Instruments Co., Ltd.). From the viewpoint of the balance of light-blocking properties, low gloss, low reflectivity, light absorption properties, and the like, at least one of the light-blocking layer 21 and the light-blocking layer 31 preferably has a 60-degree glossiness of more than 2% and 10% or less. Examples of one of preferred modes thereof include a mode in which the 60-degree glossiness of the light-blocking layer 21 is 0.01% or more and 10% or less, more preferably 0.1% or more and 8% or less, and further preferably 0.3% or more and 5% or less, and the 60-degree glossiness of the light-blocking layer 31 is more than 2% and 10% or less, more preferably 2.2% or more and 8% or less, and further preferably 2.4% or more and 10% or less. The light-blocking layer 21 and the light-blocking layer 31 each have a 60-degree glossiness of less than 10%, and the light-blocking layer 21 and the light-blocking layer 31 preferably have different 60-degree glossinesses so that the difference between the 60-degree glossiness of the light-blocking layer 21 and the 60-degree glossiness of the light-blocking layer 31 is 1.0 to 4.5%, preferably 1.5 to 4.0%, and further preferably 1.8 to 3.5%.

One feature of the multilayer light-blocking film 100 in this embodiment is that from a human engineering approach, a configuration in which in the light-blocking layer 21 and the light-blocking layer 31 having the above-described optical density and 60-degree glossiness, further the color difference ΔE*ab is 0.2 or more is adopted. The color difference ΔE*ab means a value calculated as the difference between the hues, L* values, a* values, and b* values, of the light-blocking layer 21 and the light-blocking layer 31 each obtained in accordance with JIS-Z8730: 2009 using a color meter. At this time, the color difference ΔE*ab between the light-blocking layer 21 and the light-blocking layer 31 should be appropriately set considering the balance of the visual discriminability of the front and back surfaces and the optical density (light-blocking properties) and is not particularly limited but is preferably 0.4 or more, more preferably 0.8 or more, further preferably 1.6 or more, and particularly preferably 3.2 or more. The upper limit value of the color difference ΔE*ab between the light-blocking layer 21 and the light-blocking layer 31 is not particularly limited, but usually 25.0 is taken as a rough standard.

Here, further, when the lightness of the light-blocking layer 21 and the lightness of the light-blocking layer 31 are differentiated, it is easier to discriminate the front and back of the multilayer light-blocking film 100. Here, the difference in lightness can be represented by the lightness index L* in the CIE 1976 L*a*b* color system. Specifically, the lightness index L* of the light-blocking layer 21 is 1 or more and 35 or less, the lightness index L* of the light-blocking layer 31 is 1 or more and 35 or less, and the difference between the lightness index L* of the light-blocking layer 21 and the lightness index L* of the light-blocking layer 31 is 1 or more and 30 or less, preferably 1 to 20, more preferably 2 to 15, and further preferably 3 to 10.

As a material of the light-blocking film having such properties (light-blocking layers 21 and 31), those known in the industry can be used, and the type of the light-blocking film is not particularly limited. As the light-blocking film having high optical density, a dark light-blocking film provided with one or more dark pigments or dyes such as black, gray, purple, blue, brown, red, and green pigments or dyes is preferably used. For example, as the black-based light-blocking film, a black light-blocking film (in other words, a black light-blocking layer 21 or 31) containing at least a binder resin and a black pigment, and a dark pigment or dye blended as needed is preferably used. This black light-blocking film will be described in detail below as an example.

Examples of the binder resin include, but are not particularly limited to, thermoplastic resins or thermosetting resins such as poly(meth)acrylic acid-based resins, polyester-based resins, polyvinyl acetate-based resins, polyvinyl chloride-based resins, polyvinyl butyral-based resins, cellulosic resins, polystyrene/polybutadiene resins, polyurethane-based resins, alkyd resins, acrylic resins, unsaturated polyester-based resins, epoxy ester-based resins, epoxy-based resins, epoxy acrylate-based resins, urethane acrylate-based resins, polyester acrylate-based resins, polyether acrylate-based resins, phenolic resins, melamine-based resins, urea-based resins, and diallyl phthalate-based resins. Thermoplastic elastomers, thermosetting elastomers, ultraviolet curable resins, electron beam curable resins, and the like can also be used. One of these can be used alone, and two or more of these can also be used in combination. The binder resin can be appropriately selected and used according to the required performance and the application. For example, in applications where heat resistance is required, thermosetting resins are preferred.

The content (total amount) of the binder resin in the light-blocking layer 21 or 31 is not particularly limited but is preferably 40 to 90% by mass, more preferably 50 to 85% by mass, and further preferably 60 to 80% by mass from the viewpoint of adhesiveness, light-blocking properties, scratch resistance, sliding properties, flatting properties, and the like.

The black pigment colors the binder resin black to provide light-blocking properties. Specific examples of the black pigment include, but are not particularly limited to, black resin particles, magnetite-based black, copper-iron-manganese-based black, titanium black, and carbon black. Among these, black resin particles, titanium black, and carbon black are preferred because of excellent concealing properties, and carbon black is more preferred. One of these can be used alone, and two or more of these can also be used in combination. Similarly, the dark pigment or dye blended as needed should also be appropriately selected and used from among known ones.

As the carbon black, those made by various known manufacturing methods, such as oil furnace black, lamp black, channel black, gas furnace black, acetylene black, thermal black, and ketjen black, are known, but the type of the carbon black is not particularly limited. From the viewpoint of providing conductivity to the light-blocking layer 21 or 31 to prevent electrostatic charging, conductive carbon black is particularly preferably used. The history of carbon black is old, and various grades of carbon black simple substances and carbon black dispersions are commercially available from, for example, Mitsubishi Chemical Corporation, Asahi Carbon Co., Ltd., MIKUNI COLOR LTD., RESINO COLOR INDUSTRY CO., LTD., Cabot, and DEGUSSA. The carbon black should be appropriately selected from among these according to the required performance and the application. The particle size of the carbon black can be appropriately set according to the required performance and the like and is not particularly limited. The average particle diameter D₅₀ of the carbon black is preferably 0.01 to 2.0 µm, more preferably 0.05 to 0.1 µm, and further preferably 0.08 to 0.5 µm. The average particle diameter herein means a volume-based median diameter (D₅₀) measured by a laser diffraction particle size distribution measuring apparatus (for example, SHIMADZU CORPORATION: SALD-7000).

The content (total amount) of the black pigment in the light-blocking layer 21 or 31 is not particularly limited but is preferably 10 to 60% by mass, more preferably 15 to 50% by mass, and further preferably 20 to 40% by mass in terms of solids based on all resin components contained in the light-blocking layer 21 or 31 (phr) from the viewpoint of dispersibility, film-forming properties, handling properties, adhesiveness, slip properties, flatting properties, abrasion resistance, and the like.

The thicknesses of the light-blocking layers 21 and 31 can be appropriately set according to the required performance and the application and are not particularly limited. From the viewpoint of high optical density, weight reduction, and film thinning, the thicknesses of the light-blocking layers 21 and 31 are each preferably 0.1 µm or more, more preferably 0.2 µm or more, further preferably 0.5 µm or more, and particularly preferably 1 µm or more and preferably 15 µm or less, more preferably 12 µm or less, further preferably 9 µm or less, and particularly preferably 6 µm or less on the upper limit side.

From the viewpoint of weight reduction and film thinning, the total thickness of the multilayer light-blocking film 100 is preferably 0.5 µm or more and 50 µm or less, more preferably 1 µm or more, and further preferably 5 µm or more, and more preferably 40 µm or less, and further preferably 25 µm or less.

One feature of the multilayer light-blocking film 100 in this embodiment is that from a human engineering approach, a configuration in which in the light-blocking layer 21 and the light-blocking layer 31 having the above-described optical density and 60-degree glossiness, further the color difference ΔE*ab is 0.2 or more is adopted. By adopting the light-blocking layer 21 and the light-blocking layer 31 further provided with the color difference ΔE*ab in this manner, the optical density, the gloss, the luster, the color difference, and the like are combined, and as a result, the perceptual color difference increases, and thus it is extremely easy to discriminate the front and back of the multilayer light-blocking film 100 in a noncontact manner, that is, visually.

The method for adjusting the color difference ΔE*ab between the light-blocking layer 21 and the light-blocking layer 31 includes, but is not particularly limited to, a method of differentiating the content of the black pigment between the light-blocking layer 21 and the light-blocking layer 31, a method of using black pigments having different blacknesses for the light-blocking layer 21 and the light-blocking layer 31, a method of using black pigments of different sizes for the light-blocking layer 21 and the light-blocking layer 31, a method of differentiating surface roughness between the light-blocking layer 21 and the light-blocking layer 31, a method of using binder resins having different hues for the light-blocking layer 21 and the light-blocking layer 31, a method of using a black pigment and a dark pigment or dye in combination for only one of the light-blocking layer 21 and the light-blocking layer 31, and a method of differentiating the types of the black pigment and the dark pigment or dye used, between the light-blocking layer 21 and the light-blocking layer 31. It is also possible to adjust lightness, hue, and/or saturation by blending various known additives used in light-blocking films. For these adjustment methods, the various methods can each be performed alone or can be performed in appropriate combination.

In addition, the method for adjusting the 60-degree glossinesses of the light-blocking layer 21 and the light-blocking layer 31 includes, but is not particularly limited to, a method of differentiating the content of the black pigment between the light-blocking layer 21 and the light-blocking layer 31, a method of using black pigments having different blacknesses for the light-blocking layer 21 and the light-blocking layer 31, a method of using black pigments of different sizes for the light-blocking layer 21 and the light-blocking layer 31, a method of differentiating surface roughness between the light-blocking layer 21 and the light-blocking layer 31, a method of using binder resins having different hues for the light-blocking layer 21 and the light-blocking layer 31, a method of using a black pigment and a dark pigment or dye in combination for only one of the light-blocking layer 21 and the light-blocking layer 31, and a method of differentiating the types of the black pigment and the dark pigment or dye used, between the light-blocking layer 21 and the light-blocking layer 31. It is also possible to adjust lightness, hue, and/or saturation by blending various known additives used in light-blocking films. For these adjustment methods, the various methods can each be performed alone or can be performed in appropriate combination.

On the outer peripheral side surfaces of the light-blocking layer 21 or 31, inclined end surfaces 22 or 32 (outer peripheral end surfaces 22 or 32) having an inclination angle θ corresponding to that of the above-described inclined end surfaces 12 are provided on both side surfaces (two places). These inclined end surfaces 22 and 32 are provided so as to be exposed in a planar view from the normal direction of the major surface 21a of the light-blocking layer 21 so as to be visible from the major surface 21a side of the light-blocking layer 21 when the light-blocking layers 21 and 31 are brought into a flat state as shown in Figure 2 (see Figure 3). Specifically, the inclination angle θ between the major surface 21a of the light-blocking layer 21 and the inclined end surface 22 or 32 is set to be 10 to 87°. As long as the inclined end surfaces 22 and 32 are visible from the major surface 21a side of the light-blocking layer 21, for example, transparent or semitransparent protective layers or the like may be provided on the inclined end surfaces 22 and 32 for film end surface strengthening. If configuring the light-blocking layers 21 and 31 in this manner and using the difference in hue, saturation, lightness, transparency, 60-degree glossiness, total light transmittance, or the like between the substrate film 11 and the light-blocking layers 21 and 31, the discriminability of the light-blocking layers 21 and 31 improves further. Here, the inclination angle θ of the inclined end surface 22 or 32 is not particularly limited but is preferably 10 to 87°, more preferably 30 to 85°, further preferably 40 to 83°, and particularly preferably 45 to 80° like the inclined end surface 12. By setting an inclination angle equal or nearly equal to that of the inclined end surface 12, the end surface strength tends to be easily maintained high, and the productivity tends to be easily improved.

The light-blocking layers 21 and 31 may contain various additives known in the industry. Specific examples thereof include, but are not particularly limited to, matting agents (flatting agents), lubricants, conductive agents, flame retardants, antimicrobial agents, fungicides, antioxidants, plasticizers, leveling agents, flow-adjusting agents, antifoaming agents, and dispersing agents. Examples of the matting agents include, but are not particularly limited to, organic fine particles such as crosslinked polymethyl methacrylate particles and crosslinked polystyrene particles, and inorganic fine particles such as silica, magnesium aluminometasilicate, and titanium oxide. Examples of the lubricants include, but are not particularly limited to, hydrocarbon-based lubricants such as polyethylene, paraffins, and waxes; fatty acid-based lubricants such as stearic acid and 12-hydroxystearic acid; amide-based lubricants such as stearic acid amide, oleic acid amide, and erucic acid amide; ester-based lubricants such as butyl stearate and stearic acid monoglyceride; alcohol-based lubricants; solid lubricants such as metallic soaps, talc, and molybdenum disulfide; silicone resin particles, and particles of fluororesins such as polytetrafluoroethylene waxes and polyvinylidene fluoride. Among these, particularly organic lubricants are preferably used. When an ultraviolet curable resin or an electron beam curable resin is used as the binder resin, for example, a sensitizer such as n-butylamine, triethylamine, or tri-n-butylphosphine, and an ultraviolet absorbing agent may be used. One of these can be used alone, and two or more of these can also be used in combination. The content of these is not particularly limited, but the content of each is generally preferably 0.01 to 5% by mass in terms of solids based on all resin components contained in the light-blocking layer 21 or 31.

In addition, the light-blocking layers 21 and 31 preferably have a visible light reflectance of 10.0% or less. Here, the visible light reflectance means relative total light reflectance when light is allowed to enter at an incidence angle of 8° to the light-blocking layer 21 or 31 using a spectrophotometer (spectrophotometer SolidSpec-3700 manufactured by SHIMADZU CORPORATION, or the like) and barium sulfate as a standard plate. From the viewpoint of having higher light-blocking properties, and the like, the visible light reflectances of the light-blocking layers 21 and 31 are more preferably 8% or less, further preferably 6% or less, and particularly preferably 4% or less. From the viewpoint of increasing the discriminability of the light-blocking layers 21 and 31, the difference in visible light reflectance between the light-blocking layer 21 and the light-blocking layer 31 is preferably 1% or more. As the multilayer light-blocking film 100, the diffuse reflectance in the range of infrared light (800 to 1000 nm) other than visible light is preferably 10% or less, more preferably 8% or less, further preferably 6% or less, and particularly preferably 4% or less.

Further, the light-blocking layers 21 and 31 preferably have a surface resistivity of less than 1.0 × 10⁸ Ω, more preferably less than 1.0 × 10⁵ Ω, and further preferably less than 5.0 × 10⁴ Ω from the viewpoint of having sufficient antistatic performance. As used herein, the surface resistivity is a value measured in accordance with JIS-K6911: 1995.

The method for manufacturing the multilayer light-blocking film 100 is not particularly limited as long as one having the above-described configuration is obtained. From the viewpoint of manufacturing the light-blocking layers 21 and 31 on the substrate film 11 with good reproducibility, simply, and at low cost, conventionally known application methods such as doctor coating, dip coating, roll coating, bar coating, die coating, blade coating, air knife coating, kiss coating, spray coating, and spin coating are preferably used.

For example, the light-blocking layer 21 or 31 can be formed on the substrate film 11 by applying onto a major surface of the substrate film 11 an application liquid containing in a solvent the binder resin and the black pigment described above and additives as optional components blended as needed, drying the application liquid, and then performing heat treatment, pressurization treatment, and the like as needed. As the solvent of the application liquid used here, water; ketone-based solvents such as methyl ethyl ketone, methyl isobutyl ketone, and cyclohexanone; ester-based solvents such as methyl acetate, ethyl acetate, and butyl acetate; ether-based solvents such as methyl cellosolve and ethyl cellosolve; alcohol-based solvents such as methyl alcohol, ethyl alcohol, and isopropyl alcohol, and mixed solvents thereof, and the like can be used. In order to improve the adhesion between the substrate film 11 and the light-blocking layer 21 or 31, anchor treatment, corona treatment, or the like can also be performed as needed. Further, an intermediate layer such as a primer layer or an adhesive layer can also be provided between the substrate film 11 and the light-blocking layer 21 or 31 as needed. The multilayer light-blocking film 100 having the desired shape can also be simply obtained by various known forming methods such as compression molding, injection molding, blow molding, transfer molding, and extrusion. Once a sheet shape is formed, then vacuum forming, pressure forming, or the like can also be performed.

The method for forming the inclined end surfaces 12, 22, and 32 is not particularly limited either. The inclined end surfaces 12, 22, and 32 having any inclination angle θ can be made by appropriately applying various known methods. For example, the inclined end surfaces 12, 22, and 32 can be simply provided by providing a multilayer light-blocking film in which the light-blocking layer 21 and the light-blocking layer 31 are provided on the substrate film 11, and cutting off (cutting out) its outer peripheral side surfaces at the above-described inclination angle. When the inclined end surfaces 22 and 32 are unnecessary, it is recommended to provide the substrate film 11 previously provided with the inclined end surfaces 12 having any inclination angle θ and provide the light-blocking layer 21 and the light-blocking layer 31 on this substrate film 11.

### (Operation)

In the multilayer light-blocking film 100 and the web roll 200 in this embodiment, the first light-blocking layer 21 and the second light-blocking layer 31 having an optical density of 2.5 or more in total, having a predetermined 60-degree glossiness and a predetermined color difference ΔE*ab are adopted. Therefore, by using these as a light-blocking member for optical equipment such as a lens unit or a camera module, unnecessary incident light and reflected light can be removed, the occurrence of halation, lens flare, a ghost, and the like can be prevented, and the image quality of a picked-up image can be improved.

Moreover, in the above-described multilayer structure, the optical densities, 60-degree glossinesses, and color difference ΔE*ab of the first light-blocking layer 21 and the second light-blocking layer 31 exposed on the front and back surfaces are adjusted, and therefore the perceptual color difference is increased, and thus the discrimination of the front and back surfaces can be extremely easily performed in a noncontact manner, that is, visually. In addition, the inclined end surfaces 12 visibly exposed in a planar view are recognizable as bright portions having a glossy feeling and luster, and therefore the discrimination of the front and back surfaces of the multilayer light-blocking film 100 can be especially easily performed in a noncontact manner, that is, visually. This is due to the difference in hue, saturation, lightness, transparency, 60-degree glossiness, total light transmittance, or the like between the first light-blocking layer 21 or the second light-blocking layer 31 and the inclined end surfaces 12 (the substrate film 11).

Also when the multilayer light-blocking film 100 and the web roll 200 in this embodiment are handled in a dark place, the inclined end surfaces 12 function effectively. In other words, the inclined end surfaces 12 (the substrate film 11) are clearly recognizable as bright portions having a glossy feeling and luster, even with a little light, due to the difference from the first light-blocking layer 21 and the second light-blocking layer 31. In addition, the discrimination of the front and back surfaces can also be performed by directly touching the inclined end surface 12 with fingers or the like to confirm its inclination direction.

### (Modifications)

The present invention can be carried out by making any changes without departing from the scope defined in the claims. For example, only the inclined end surfaces 12 may be provided without providing the inclined end surfaces 22 and 32. In addition, for the place where the inclined end surface 12 is formed, the inclined end surface 12 should be provided on at least part of the outer peripheral side surfaces of the substrate film 11. Further, the inclined end surface 12 may be provided on both side surfaces (two places) of the substrate film 11 so as to extend in the MD direction of the multilayer light-blocking film 100 as in this embodiment, or provided on one side surface (one place) or both side surfaces (two places) of the substrate film 11 so as to extend in the TD direction of the substrate film 11. Alternatively, the inclined end surfaces 12 may be provided over all of the outer peripheral side surfaces (entire periphery) of the substrate film 11. In addition, the inclined end surfaces 12 extending in the MD direction and/or the TD direction may be continuously formed as in this embodiment and may be intermittently formed. Further, in the above-described embodiment, a mode in which the light-blocking layer 21 and the light-blocking layer 31 are provided on the front and back of the substrate film 11 has been shown, but a multilayer structure (two-layer structure) of the light-blocking layer 21 and the light-blocking layer 31 may be provided without providing the substrate film 11. In addition, the above-described multilayer structure should be in a state in which the light-blocking layer 21 and the light-blocking layer 31 are exposed on the front and back surfaces during the handling of the multilayer light-blocking film 100, and additional layers such as protective layers and other light-blocking layers may be formed so as to cover the exposed surfaces of the light-blocking layer 21 and the light-blocking layer 31, during subsequent use and mounting. Further, the light-blocking layer 21 or 31 may be formed of two or more light-blocking films. For example, a multilayer light-blocking layer in which a light-blocking film 21a and a light-blocking film 21b are layered can be applied as the light-blocking layer 21. The same applies to the light-blocking layer 31. At this time, the above-described various performances and physical properties required of the light-blocking layer 21 should be satisfied as the layered body of the light-blocking film 21a and the light-blocking film 21b. The same applies to the light-blocking layer 31.

### (Second Embodiment)

Figure 4 is an exploded perspective view schematically showing a lens unit 41 and a camera module 51 in a second embodiment of the present invention. The lens unit 41 is composed of a lens group 42 (lenses 42A, 42B, 42C, 42D, and 42E), a multistage cylindrical holder 43, and light-blocking rings 100A, 100B, and 100C for optical equipment (the multilayer light-blocking films 100) as light-blocking spacers. A plurality of height difference portions 43a, 43b, and 43c are provided in the inner peripheral portion of the holder 43. Using these height difference portions 43a, 43b, and 43c, the lens group 42 and the light-blocking rings 100A, 100B, and 100C for optical equipment are housed and disposed at predetermined positions in the holder 43 in a state of being coaxially (on the same optical axis) disposed and stacked. Here, as the lenses 42A, 42B, 42C, 42D, and 42E, various lenses such as convex lenses and concave lenses can be used, and their curved surfaces may be spherical or aspherical. On the other hand, the camera module 51 is composed of the above-described lens unit 41 and an image pickup device 44 such as a CCD image sensor or a CMOS image sensor that is disposed on the optical axis of this lens unit 41 and picks up an image of an object through the lens unit 41.

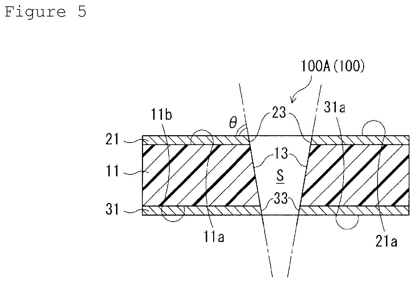

Figure 5 is a cross-sectional view schematically showing the light-blocking ring 100A for optical equipment. The light-blocking ring 100A for optical equipment is obtained by stamping the multilayer light-blocking film 100 in the first embodiment described above into a ring shape (hollow tubular shape). Therefore, the light-blocking ring 100A for optical equipment has the same multilayer structure as the multilayer light-blocking film 100 in the first embodiment described above.

The light-blocking ring 100A for optical equipment is a light-blocking plate whose outer shape is a ring shape (hollow tubular shape) in which a circular hollow portion S is provided at a generally central position in a planar view. In this embodiment, the above-described inclined end surfaces 12, 22, and 32 are not provided on the outer peripheral side surface of the light-blocking ring 100A for optical equipment, and these outer peripheral side surfaces are formed in a rectangular shape in a cross-sectional view. In other words, in the light-blocking ring 100A for optical equipment in this embodiment, the inclination angle θ of the outer peripheral end surface is 90°. On the other hand, in the light-blocking ring 100A for optical equipment in this embodiment, inclined end surfaces 13, 23, and 33 corresponding to the above-described inclined end surfaces 12, 22, and 32 are provided on the inner peripheral end surface. The light-blocking rings 100B and 100C for optical equipment have the same configuration as the light-blocking ring 100A for optical equipment except that the size of the outer diameter and the size of the outer diameter of the hollow portion S are each different, and redundant description is omitted here.

### (Operation)

Also in the light-blocking rings 100A, 100B, and 100C for optical equipment in this embodiment, the light-blocking layer 21 and the light-blocking layer 31 having an optical density of 2.5 or more in total, having a predetermined 60-degree glossiness and a predetermined color difference ΔE*ab are adopted. Therefore, by using these as light-blocking members for optical equipment such as a lens unit or a camera module, unnecessary incident light and reflected light can be removed, the occurrence of halation, lens flare, a ghost, and the like can be prevented, and the image quality of a picked-up image can be improved.

Moreover, in the above-described multilayer structure, the optical densities, 60-degree glossinesses, and color difference ΔE*ab of the light-blocking layer 21 and the light-blocking layer 31 exposed on the front and back surfaces are adjusted, and therefore the perceptual color difference is increased, and thus the discrimination of the front and back surfaces of the light-blocking rings 100A, 100B, and 100C for optical equipment can be extremely easily performed in a noncontact manner, that is, visually. Therefore, for the lens unit 41 and the camera module 51 using these light-blocking rings 100A, 100B, and 100C for optical equipment, also during their storage and incorporation, manufacturing failure such as poor incorporation based on the false recognition of the front and back surfaces is inhibited.

Furthermore, in the light-blocking ring 100A for optical equipment in this embodiment, the inclined end surfaces 13, 23, and 33 are provided, and the discriminability of the light-blocking layers 21 and 31 is further increased. By providing the inclined end surfaces 13, 23, and 33 on the end surface on the optical axis side (inner peripheral end surface) in this manner, unnecessary reflected light can be removed, the occurrence of halation, lens flare, a ghost, and the like can be prevented, and the image quality of a picked-up image can be improved.

### (Modifications)

The present invention can be carried out by making any changes without departing from the scope defined in the claims. For example, for the outer shape of the multilayer light-blocking film 100 (the light-blocking ring 100A, 100B, or 100C for optical equipment), for example, any shape such as a polygonal shape such as a rectangular shape, a square shape, or a hexagonal shape, an elliptical shape, or an irregular shape in a planar view can be adopted. In addition, also for the shape of the hollow portion S of the light-blocking ring 100A, 100B, or 100C for optical equipment, the hollow portion S is formed in a circular shape in a planar view in this embodiment, but its outer shape is not particularly limited. For example, any shape such as a polygonal shape such as a rectangular shape, a square shape, or a hexagonal shape, an elliptical shape, or an irregular shape in a planar view can be adopted. Further, in this embodiment, the above-described inclined end surfaces 12, 22, and 32 are not provided, but either one or both of the inclined end surface 12 and the inclined end surfaces 22 and 32 can be appropriately provided as needed. Further, in the above-described embodiment, a mode in which the light-blocking layer 21 and the light-blocking layer 31 are provided on the front and back of the substrate film 11 has been shown, but a multilayer structure (two-layer structure) of the light-blocking layer 21 and the light-blocking layer 31 may be provided without providing the substrate film 11. In addition, the above-described multilayer structure should be in a state in which the light-blocking layer 21 and the light-blocking layer 31 are exposed on the front and back surfaces during the handling of the multilayer light-blocking film 100, and additional layers such as protective layers and other light-blocking layers may be formed so as to cover the exposed surfaces of the light-blocking layer 21 and the light-blocking layer 31, during subsequent use and mounting. Further, the light-blocking layer 21 or 31 may be formed of two or more light-blocking films. For example, a multilayer light-blocking layer in which a light-blocking film 21a and a light-blocking film 21b are layered can be applied as the light-blocking layer 21. The same applies to the light-blocking layer 31. At this time, the above-described various performances and physical properties required of the light-blocking layer 21 should be satisfied as the layered body of the light-blocking film 21a and the light-blocking film 21b. The same applies to the light-blocking layer 31.

### Industrial Applicability

The present invention can be widely and effectively used as a high-performance light-blocking member in the precision machine field, the semiconductor field, the optical equipment field, electronic equipment, and the like. Especially, the present invention can be particularly effectively used as a light-blocking member used in a lens unit, a camera module, a sensor unit or the like mounted in a high-performance single-lens reflex camera, a compact camera, a video camera, a cellular phone, a projector, in-vehicle camera, in-vehicle sensor, optical sensor or the like.

### Reference Signs List

11 ... substrate film
11a ... surface (major surface)
11b ... surface (major surface)
12 ... inclined end surface
13 ... inclined end surface
21 ... light-blocking layer
21a ... surface (major surface)
22 ... inclined end surface
23 ... inclined end surface
31 ... light-blocking layer
31a ... surface (major surface)
32 ... inclined end surface
33 ... inclined end surface
41 ... lens unit
42 ... lens group
42A ... lens
42B ... lens
42C ... lens
42D ... lens
42E ... lens
43 ... holder
43a ... height difference portion
43b ... height difference portion
43c ... height difference portion
44 ... image pickup device
51 ... camera module
100 ... multilayer light-blocking film
100A ... light-blocking ring for optical equipment (multilayer light-blocking film)
100B ... light-blocking ring for optical equipment (multilayer light-blocking film)
100C ... light-blocking ring for optical equipment (multilayer light-blocking film)
200 ... web roll
θ ... inclination angle
S ... hollow portion
MD ... flow direction
TD ... vertical direction

## Claims

1. A multilayer light-blocking film (100) for optical equipment, comprising:
a multilayer structure comprising at least a first light-blocking layer (21) and a second light-blocking layer (31), wherein
the first light-blocking layer (21) and the second light-blocking layer (31) have an optical density of 2.5 or more in total,
the first light-blocking layer (21) and the second light-blocking layer (31) each have a 60-degree glossiness of less than 10%, and
**characterized in that**
a color difference ΔE*ab between the first light-blocking layer (21) and the second light-blocking layer (31) is 0.2 or more in a CIE 1976 L*a*b* color system,
the first light-blocking layer (21) and/or the second light-blocking layer (31) have inclined end surfaces (12, 13, 22, 23) so that a film width increases from the first light-blocking layer (21) toward the second light-blocking layer (31), and
the inclined end surface is exposed in a planar view seen from a normal direction of a major surface (21a) of the first light-blocking layer (21).

2. The multilayer light-blocking film (100) for optical equipment according to claim 1, wherein the color difference ΔE*ab between the first light-blocking layer (21) and the second light-blocking layer (31) is 0.4 or more.

3. The multilayer light-blocking film (100) for optical equipment according to claim 1 or 2, wherein at least one of the first light-blocking layer (21) and the second light-blocking layer (31) has a 60-degree glossiness of more than 2% and 10% or less.

4. The multilayer light-blocking film (100) for optical equipment according to any one of claims 1 to 3, wherein
a lightness index L* of the first light-blocking layer (21) is 1 or more and 35 or less,
a lightness index L* of the second light-blocking layer (31) is 1 or more and 35 or less, and
a difference between the lightness index L* of the first light-blocking layer (21) and the lightness index L* of the second light-blocking layer (31) is 1 or more and 30 or less.

5. The multilayer light-blocking film (100) for optical equipment according to any one of claims 1 to 4, wherein the first light-blocking layer (21) and the second light-blocking layer (31) have different 60-degree glossinesses, and a difference between the 60-degree glossiness of the first light-blocking layer (21) and the 60-degree glossiness of the second light-blocking layer (31) is 1.0 to 4.5%.

6. The multilayer light-blocking film (100) for optical equipment according to any one of claims 1 to 5, having a ring-shaped outer shape.

7. The multilayer light-blocking film (100) for optical equipment according to any one of claims 1 to 6, wherein a hollow portion (S) is provided in the first light-blocking layer (21) and/or the second light-blocking layer (31), and the first light-blocking layer (21) and/or the second light-blocking layer (31) each have an inclined end surface on an inner periphery of the hollow portion (S).

8. The multilayer light-blocking film (100) for optical equipment according to any one of claims 1 to 7, wherein an inclination angle (θ) between the major surface (21a) of the first light-blocking layer (21) and the inclined end surface is 10 to 87°.

9. The multilayer light-blocking film (100) for optical equipment according to any one of claims 1 to 8, comprising:
a multilayer structure comprising at least a substrate film (11), the first light-blocking layer (21) provided on one major surface side (11a) of the substrate film (11), and the second light-blocking layer (31) provided on the other major surface side (11b) of the substrate film (11).

10. The multilayer light-blocking film (100) for optical equipment according to claim 9, wherein the substrate film (11) has a total light transmittance of 80.0 to 99.9%.

11. The multilayer light-blocking film (100) for optical equipment according to claim 9 or 10, wherein the substrate film (11) has a thickness of 0.5 µm or more and 50 µm or less.

12. A lens unit (41) comprising a plurality of lenses (42A-E) and at least one or more light-blocking plates stacked in an optical axis direction of the lenses (42A-E),
wherein at least one or more of the light-blocking plates comprise the multilayer light-blocking film (100) for optical equipment according to any one of claims 1 to 11.

13. A camera module (51) comprising at least:
a lens unit (41) comprising a plurality of lenses (42A-E) and at least one or more light-blocking plates stacked in an optical axis direction of the lenses (42A-E); and
an image pickup device (44) for picking up an image of an object through the lens unit (41),
wherein at least one or more of the light-blocking plates comprise the multilayer light-blocking film (100) for optical equipment according to any one of claims 1 to 11.

## Patentansprüche

1. Mehrschichtige lichtundurchlässige Folie (100) für optische Geräte, umfassend:
eine Mehrschichtstruktur, die mindestens eine erste lichtundurchlässige Schicht (21) und eine zweite lichtundurchlässige Schicht (31) umfasst, wobei
die erste lichtundurchlässige Schicht (21) und die zweite lichtundurchlässige Schicht (31) eine optische Dichte von insgesamt 2,5 oder mehr aufweisen,
die erste lichtundurchlässige Schicht (21) und die zweite lichtundurchlässige Schicht (31) jeweils einen 60-Grad-Glanz von weniger als 10% aufweisen, und
**dadurch gekennzeichnet, dass**
ein Farbunterschied ΔE*ab zwischen der ersten lichtundurchlässigen Schicht (21) und der zweiten lichtundurchlässigen Schicht (31) 0,2 oder mehr in einem CIE 1976 L*a*b* Farbsystem beträgt,
die erste lichtundurchlässige Schicht (21) und/oder die zweite lichtundurchlässige Schicht (31) geneigte Endflächen (12, 13, 22, 23) aufweisen, so dass eine Filmbreite von der ersten lichtundurchlässigen Schicht (21) zur zweiten lichtundurchlässigen Schicht (31) hin zunimmt, und
die geneigte Endfläche in einer ebenen Ansicht von einer Normalenrichtung einer Hauptfläche (21a) der ersten lichtundurchlässigen Schicht (21) aus gesehen freiliegt.

2. Mehrschichtige lichtundurchlässige Folie (100) für optische Geräte nach Anspruch 1, wobei der Farbunterschied ΔE*ab zwischen der ersten lichtundurchlässigen Schicht (21) und der zweiten lichtundurchlässigen Schicht (31) 0,4 oder mehr beträgt.

3. Mehrschichtige lichtundurchlässige Folie (100) für optische Geräte nach Anspruch 1 oder 2, wobei die erste lichtundurchlässige Schicht (21) und/oder die zweite lichtundurchlässige Schicht (31) einen 60-Grad-Glanz von mehr als 2 % und 10 % oder weniger aufweist.

4. Mehrschichtige lichtundurchlässige Folie (100) für optische Geräte nach einem der Ansprüche 1 bis 3, wobei
ein Helligkeitsindex L* der ersten lichtundurchlässigen Schicht (21) 1 oder mehr und 35 oder weniger beträgt,
ein Helligkeitsindex L* der zweiten lichtundurchlässigen Schicht (31) 1 oder mehr und 35 oder weniger beträgt, und
eine Differenz zwischen dem Helligkeitsindex L* der ersten lichtundurchlässigen Schicht (21) und dem Helligkeitsindex L* der zweiten lichtundurchlässigen Schicht (31) 1 oder mehr und 30 oder weniger beträgt.

5. Mehrschichtige lichtundurchlässige Folie (100) für optische Geräte nach einem der Ansprüche 1 bis 4, wobei die erste lichtundurchlässige Schicht (21) und die zweite lichtundurchlässige Schicht (31) einen unterschiedlichen 60-Grad-Glanz aufweisen und ein Unterschied zwischen dem 60-Grad-Glanz der ersten lichtundurchlässigen Schicht (21) und dem 60-Grad-Glanz der zweiten lichtundurchlässigen Schicht (31) 1,0 bis 4,5% beträgt.

6. Mehrschichtige lichtundurchlässige Folie (100) für optische Geräte nach einem der Ansprüche 1 bis 5, die eine ringförmige Außenform aufweist.

7. Mehrschichtige lichtundurchlässige Folie (100) für optische Geräte nach einem der Ansprüche 1 bis 6, wobei in der ersten lichtundurchlässigen Schicht (21) und/oder der zweiten lichtundurchlässigen Schicht (31) ein hohler Abschnitt (S) vorgesehen ist, und die erste lichtundurchlässige Schicht (21) und/oder die zweite lichtundurchlässige Schicht (31) jeweils eine geneigte Endfläche an einem Innenumfang des hohlen Abschnitts (S) aufweisen.

8. Mehrschichtige lichtundurchlässige Folie (100) für optische Geräte nach einem der Ansprüche 1 bis 7, wobei ein Neigungswinkel (θ) zwischen der Hauptfläche (21a) der ersten lichtundurchlässigen Schicht (21) und der geneigten Endfläche 10 bis 87° beträgt.

9. Die mehrschichtige lichtundurchlässige Folie (100) für optische Geräte nach einem der Ansprüche 1 bis 8, umfassend:
eine Mehrschichtstruktur, die mindestens einen Substratfilm (11) umfasst, wobei die erste lichtundurchlässige Schicht (21) auf einer Hauptoberflächenseite (11a) des Substratfilms (11) vorgesehen ist, und die zweite lichtundurchlässige Schicht (31) auf der anderen Hauptoberflächenseite (11b) des Substratfilms (11) vorgesehen ist.

10. Mehrschichtige lichtundurchlässige Folie (100) für optische Geräte nach Anspruch 9, wobei der Substratfilm (11) eine Gesamtlichtdurchlässigkeit von 80,0 bis 99,9 % aufweist.

11. Mehrschichtige lichtundurchlässige Folie (100) für optische Geräte nach Anspruch 9 oder 10, wobei der Substratfilm (11) eine Dicke von 0,5 µm oder mehr und 50 µm oder weniger aufweist.

12. Linseneinheit (41), die mehrere Linsen (42A-E) und mindestens eine oder mehrere lichtundurchlässige Platten umfasst, die in einer optischen Achsenrichtung der Linsen (42A-E) gestapelt sind,
wobei mindestens eine oder mehrere der lichtundurchlässigen Platten die mehrschichtige lichtundurchlässige Folie (100) für optische Geräte nach einem der Ansprüche 1 bis 11 umfasst.

13. Kameramodul (51), umfassend:
eine Linseneinheit (41), die mehrere Linsen (42A-E) und mindestens eine oder mehrere lichtundurchlässige Platten umfasst, die in einer optischen Achsenrichtung der Linsen (42A-E) gestapelt sind; und
eine Vorrichtung (44) zum Aufnehmen eines Bildes eines Objekts durch die Linseneinheit (41),
wobei mindestens eine oder mehrere der lichtundurchlässigen Platten die mehrschichtige lichtundurchlässige Folie (100) für optische Geräte nach einem der Ansprüche 1 bis 11 umfasst.

## Revendications

1. Film multicouche (100) de blocage de lumière pour équipement optique, comprenant :
une structure multicouche comprenant au moins une première couche (21) de blocage de lumière et une deuxième couche (31) de blocage de lumière, dans lequel
la première couche (21) de blocage de lumière et la deuxième couche (31) de blocage de lumière ont une densité optique de 2,5 ou plus au total,
la première couche (21) de blocage de lumière et la deuxième couche (31) de blocage de lumière ont chacune un brillant à 60 degrés de moins de 10%, et
**caractérisé en ce que**
une différence de couleur ΔE*ab entre la première couche (21) de blocage de lumière et la deuxième couche (31) de blocage de lumière est 0,2 ou plus dans un système couleur CIE 1976 L*a*b,
la première couche (21) de blocage de lumière et/ou la deuxième couche (31) de blocage de lumière ont/a des surfaces d'extrémité inclinées (12, 13, 22, 23) de telle façon qu'une largeur de film augmente de la première couche (21) de blocage de lumière vers la deuxième couche (31) de blocage de lumière, et
la surface d'extrémité inclinée est exposée dans une vue en plan vue depuis une direction normale d'une surface principale (21a) de la première couche (21) de blocage de lumière.

2. Film multicouche (100) de blocage de lumière pour équipement optique selon la revendication 1, dans lequel la différence de couleur ΔE*ab entre la première couche (21) de blocage de lumière et la deuxième couche (31) de blocage de lumière est 0,4 ou plus.

3. Film multicouche (100) de blocage de lumière pour équipement optique selon la revendication 1 ou 2, dans lequel au moins une parmi la première couche (21) de blocage de lumière et la deuxième couche (31) de blocage de lumière a un brillant à 60 degrés de plus de 2% et 10% ou moins.

4. Film multicouche (100) de blocage de lumière pour équipement optique selon l'une quelconque des revendications 1 à 3, dans lequel
un indice de luminosité L* de la première couche (21) de blocage de lumière est 1 ou plus et 35 ou moins,
un indice de luminosité L* de la deuxième couche (31) de blocage de lumière est 1 ou plus et 35 ou moins, et
une différence entre l'indice de luminosité L* de la première couche (21) de blocage de lumière et l'indice de luminosité L* de la deuxième couche (31) de blocage de lumière est 1 ou plus et 30 ou moins.

5. Film multicouche (100) de blocage de lumière pour équipement optique selon l'une quelconque des revendications 1 à 4, dans lequel la première couche (21) de blocage de lumière et la deuxième couche (31) de blocage de lumière ont des brillants à 60 degrés différents, et une différence entre le brillant à 60 degrés de la première couche (21) de blocage de lumière et le brillant à 60 degrés de la deuxième couche (31) de blocage de lumière est 1,0 à 4,5%.

6. Film multicouche (100) de blocage de lumière pour équipement optique selon l'une quelconque des revendications 1 à 5, ayant une forme extérieure en forme de bague.

7. Film multicouche (100) de blocage de lumière pour équipement optique selon l'une quelconque des revendications 1 à 6, dans lequel une partie creuse (S) est prévue dans la première couche (21) de blocage de lumière et/ou la deuxième couche (31) de blocage de lumière, et la première couche (21) de blocage de lumière et/ou la deuxième couche (31) de blocage de lumière ont chacune une surface d'extrémité inclinée sur une périphérie intérieure de la partie creuse (S).

8. Film multicouche (100) de blocage de lumière pour équipement optique selon l'une quelconque des revendications 1 à 7, dans lequel un angle d'inclinaison (θ) entre la surface principale (21a) de la première couche (21) de blocage de lumière et la surface d'extrémité inclinée est 10 à 87°.

9. Film multicouche (100) de blocage de lumière pour équipement optique selon l'une quelconque des revendications 1 à 8, comprenant :
une structure multicouche comprenant au moins un film substrat (11), la première couche (21) de blocage de lumière prévue sur un côté de surface principale (11a) du film substrat (11), et la deuxième couche (31) de blocage de lumière prévue sur l'autre côté de surface principale (11b) du film substrat (11).

10. Film multicouche (100) de blocage de lumière pour équipement optique selon la revendication 9, dans lequel le film substrat (11) a un facteur de transmission total de la lumière de 80,0 à 99,9%.

11. Film multicouche (100) de blocage de lumière pour équipement optique selon la revendication 9 ou 10, dans lequel le film substrat (11) a une épaisseur de 0,5 µm ou plus et 50 µm ou moins.

12. Unité d'objectif (41) comprenant une pluralité de lentilles (42A-E) et au moins une ou plusieurs plaques de blocage de lumière empilées dans un sens d'axe optique des lentilles (42A-E),
dans laquelle au moins une ou plusieurs des plaques de blocage de lumière comprennent le film multicouche (100) de blocage de lumière pour équipement optique selon l'une quelconque des revendications 1 à 11.

13. Module de caméra (51) comprenant au moins :
une unité d'objectif (41) comprenant une pluralité de lentilles (42A-E) et au moins une ou plusieurs plaques de blocage de lumière empilées dans un sens d'axe optique des lentilles (42A-E) ; et
un dispositif (44) de capture d'image pour capturer une image d'un objet à travers l'unité d'objectif (41),
dans lequel au moins une ou plusieurs des plaques de blocage de lumière comprennent le film multicouche (100) de blocage de lumière pour équipement optique selon l'une quelconque des revendications 1 à 11.
